# EUROPEAN PATENT APPLICATION

(11) **EP 4 832 069 A1**
(43) Date of publication of application: **28.10.2026**
(21) Application number: 24916469.0
(22) Date of filing: 27.09.2024
(51) Int. Cl.: H01M 4/131

(54) **POSITIVE POLE PIECE, PREPARATION METHOD, SECONDARY BATTERY AND ELECTRICAL APPARATUS**

(30) Priority: 08.01.2024 CN 202410026235
(71) Applicant: Contemporary Amperex Technology Co., Limited, Ningde, Fujian 352100 (CN)
(72) Inventor: BIE, Changfeng, Ningde, Fujian 352100 (CN); HUANG, Yang, Ningde, Fujian 352100 (CN); CHEN, Xudong, Ningde, Fujian 352100 (CN); HE, Siyuan, Ningde, Fujian 352100 (CN); SHANG, Yibo, Ningde, Fujian 352100 (CN); HE, Jianfu, Ningde, Fujian 352100 (CN); NI, Huan, Ningde, Fujian 352100 (CN); LIU, Na, Ningde, Fujian 352100 (CN)
(74) Representative: Kraus & Lederer PartGmbB
(86) International application number: PCT/CN2024/122039
(87) International publication number: WO 2025/148418

(57) **Abstract**

A positive pole piece and a preparation method therefor, and a secondary battery. The positive pole piece comprises a current collector and a positive electrode active layer. The positive electrode active layer is arranged on at least one surface of the current collector. The positive electrode active layer comprises a first positive electrode active layer at least formed on the current collector, and a second positive electrode active layer formed on the side of the first positive electrode active layer away from the current collector. The first positive electrode active layer comprises lithium iron phosphate particles, and the second positive electrode active layer comprises lithium nickel cobalt manganate particles; or, the first positive electrode active layer comprises lithium nickel cobalt manganate particles, and the second positive electrode active layer comprises lithium iron phosphate particles. The primary average particle size of the lithium iron phosphate particles is 500-3000 nm, and the specific surface area BET of the lithium iron phosphate particles is 3m²/g-8m²/g. The positive pole piece can reduce gas production when coating the upper and lower layers of the lithium iron phosphate particles and the lithium nickel cobalt manganate particles, and also has good gram capacity.

## Description

### CROSS-REFERENCE

The present application claims priority to Chinese Patent Application No. 202410026235.1 filed on January 8, 2024 and entitled "POSITIVE ELECTRODE PLATE, PREPARATION METHOD, SECONDARY BATTERY, AND ELECTRIC DEVICE", which is incorporated herein by reference in its entirety.

### TECHNICAL FIELD

The present application relates to the technical field of secondary batteries, and in particular, to a positive electrode plate, a preparation method, a secondary battery, and an electric device.

### BACKGROUND

In recent years, lithium-ion batteries have been widely used in energy storage power systems such as hydropower, thermal power, wind power, and solar power stations, as well as in various fields such as electric tools, electric bicycles, electric motorcycles, electric vehicles, military equipment, and aerospace.

Lithium nickel cobalt manganese oxide-based materials and lithium iron phosphate-based materials are commonly used lithium-ion positive electrode active materials. To reduce the cost of lithium-ion batteries, lithium nickel cobalt manganese oxide-based materials and lithium iron phosphate-based materials can be used in combination; however, this type of positive electrode active material has severe gas generation, which will greatly affect the safety and cycle life of the batteries. It is of great significance to alleviate the above problems in the mixed system of lithium iron phosphate-based materials and lithium nickel cobalt manganese oxide-based ternary materials.

### SUMMARY

The present application is made in view of the problems described above and aims to solve at least one of the technical problems existing in the prior art. To this end, the present application provides a positive electrode plate, a preparation method, a secondary battery, and an electric device. The positive electrode plate of the present application reduces the degree of gas generation while also ensuring the specific capacity of the secondary battery.

According to a first aspect of the present application, a positive electrode plate is provided. The positive electrode plate includes a current collector and a positive electrode active layer, and the positive electrode active layer is disposed on at least one surface of the current collector.

The positive electrode active layer includes a first positive electrode active layer formed at least on the current collector, and a second positive electrode active layer formed on a side, away from the current collector, of the first positive electrode active layer.

The first positive electrode active layer includes lithium iron phosphate particles, and the second positive electrode active layer includes lithium nickel cobalt manganese oxide particles; or,
the first positive electrode active layer includes lithium nickel cobalt manganese oxide particles, and the second positive electrode active layer includes lithium iron phosphate particles.

An average primary particle size of the lithium iron phosphate particles is 500-3000 nm, and a specific surface area BET of the lithium iron phosphate particles is 3-8 m²/g.

The electrochemical performance of the lithium iron phosphate particles is usually improved by nano-sizing the lithium iron phosphate particles. However, an excessively large specific surface area of the nano-sized lithium iron phosphate particles leads to severe water absorption of the nano-sized lithium iron phosphate particles. During the cycling process of a cell, a relatively high water content in the electrode plate easily leads to an increase in interfacial side reactions, thereby increasing the degree of gas generation and severely endangering the safety performance and service life of the secondary battery. Due to the above problems of the lithium iron phosphate particles, the gas generation problem of the positive electrode active material, in which the lithium iron phosphate particles and lithium nickel cobalt manganese oxide particles are coated in mixed upper and lower layers, is also very prominent. In the present application, the average primary particle size of the lithium iron phosphate particles is controlled to be 500-3000 nm, and the specific surface area of the lithium iron phosphate particles is further adjusted to 3-8 m²/g. A relatively low specific surface area has a relatively low specific surface energy, which is conducive to reducing the water absorption of the material, thereby reducing the water content of the positive electrode active material during processing and storage. Additionally, the relatively low specific surface area is also conducive to the volatilization of moisture in the material, thereby facilitating the further reduction in the water content of the positive electrode active material. However, an excessively large particle size and an excessively low specific surface area will affect the kinetic performance of the lithium iron phosphate particles, thus reducing the specific capacity of the positive electrode active material. The positive electrode active material of the present application increases the average primary particle size of the lithium iron phosphate particles and reduces the specific surface area of the lithium iron phosphate particles, and the average primary particle size and the specific surface area are controlled within a reasonable range, such that the water content of the positive electrode active material is greatly reduced, thereby reducing the degree of gas generation of the secondary battery, improving the safety performance and cycle performance of the secondary battery, while also ensuring the specific capacity of the positive electrode active material.

In any embodiment, an average primary particle size of the lithium iron phosphate particles is 650-2500 nm.

Controlling the average primary particle size of the lithium iron phosphate particles within an appropriate range is conducive to further balancing the degree of gas generation and the specific capacity of the secondary battery.

In any embodiment, a specific surface area BET of the lithium iron phosphate particles is 4-7 m²/g.

Controlling the BET of the lithium iron phosphate particles within 4-7 m²/g is conducive to further balancing the degree of gas generation and the specific capacity of the secondary battery.

In any embodiment, calculated based on a total weight of the lithium iron phosphate particles, a carbon content of the lithium iron phosphate particles is Cx wt%, and a ratio z of the specific surface area BET of the lithium iron phosphate particles to Cx satisfies 1.5 ≤ z ≤ 8.5; in some embodiments, the ratio z of the specific surface area BET of the lithium iron phosphate particles to Cx satisfies 3 ≤ z ≤ 6.

In the present application, the ratio z of the specific surface area BET of the lithium iron phosphate particles to Cx can characterize the uniform density of the carbon contained in the lithium iron phosphate particles; when the average primary particle size and the carbon content of the lithium iron phosphate particles remain unchanged, the lower the ratio z, the more uniform and dense the carbon contained in the lithium iron phosphate particles. Increasing the uniform density of the contained carbon is conducive to improving the kinetic performance and the specific capacity of the lithium iron phosphate particles, but an excessively high carbon density will affect the intercalation and deintercalation of lithium ions, thereby affecting the kinetic performance and the specific capacity of the secondary battery. In the present application, the range of the ratio z is conducive to allowing the carbon contained in the lithium iron phosphate particles to have a suitable uniform density, thereby facilitating the improvement in the conductive performance of the surfaces of the particles and the further improvement in the specific capacity and the kinetic performance of the secondary battery. Furthermore, the discharge voltage range of lithium nickel cobalt manganese oxide particles is higher. In the double-layer positive electrode active material, improving the kinetic performance of the lithium iron phosphate particles is more conducive to the coordinated discharge of the lithium iron phosphate particles and the lithium nickel cobalt manganese oxide particles, which is conducive to further improving the overall kinetic performance of the positive electrode active material.

In any embodiment, calculated based on a total weight of the lithium iron phosphate particles, a carbon content of the lithium iron phosphate particles is 0.8-2.0 wt%; in some embodiments, calculated based on a total weight of the lithium iron phosphate particles, a carbon content of the lithium iron phosphate particles is 1.0-1.6 wt%.

In the present application, the carbon content range helps to further improve the specific capacity of the secondary battery while reducing the effect on the water absorption degree of the secondary battery.

In any embodiment, the lithium iron phosphate particles have a molecular formula Liₘ₁Feₓ₁P_{y1}O_{z1}Q_{q1}, where Q includes at least one of Al, Na, K, Mg, Cu, Mn, Cr, Zn, Pb, Ca, Co, Ni, Sr, Nb, V, Ti, B, S, Si, N, F, Cl, or Br, 0.95 ≤ m1 ≤ 1.15, 0.9 ≤ x1 ≤ 1, 0.95 ≤ y1 ≤ 1, 3.5 ≤ z1 ≤ 4, and 0 < q1 ≤ 0.1, and/or
the lithium nickel cobalt manganese oxide particles have a molecular formula LiRₓ₂Ni_{y2}Co_{z2}Mn_{1-x2-y2-z2}O₂, where R includes at least one of Cr, Ti, V, Mg, Al, or Nb, 0 ≤ x2 < 1, 0 < y2 < 1, 0 < z2 < 1, and 0 < x2 + y2 + z2 < 1.

In any embodiment, Q includes at least one of Ti, V, Mg, or Nb; in some embodiments, Q is Ti.

Doping the above elements into the lithium iron phosphate particles and/or the lithium nickel cobalt manganese oxide particles helps to improve the ion transport capability of the positive electrode active material. Furthermore, the discharge performance requirements of lithium nickel cobalt manganese oxide particles are relatively high. In the double-layer positive electrode active material, improving the kinetic performance of the lithium iron phosphate particles is more conducive to the coordinated discharge of the lithium iron phosphate particles and the lithium nickel cobalt manganese oxide particles, which is conducive to further improving the overall kinetic performance of the positive electrode active material.

In any embodiment, calculated based on a total weight of the lithium iron phosphate particles, a content of Q in the lithium iron phosphate particles is 1000-10000 ppm; in some embodiments, calculated based on a total weight of the lithium iron phosphate particles, a content of Q in the lithium iron phosphate particles is 2500-6000 ppm.

The content of element Q in the existing lithium iron phosphate particles is generally low, or no element Q is added. The range of the element Q in the present application helps to balance the average primary particle size of the positive electrode active material on the basis of further improving the kinetic performance and specific capacity of the positive electrode active material.

In any embodiment, a capacity proportion η of the lithium iron phosphate particles is ≥ 88%, and η is defined as follows:
A battery having the lithium iron phosphate particles as a positive electrode active material is charged and discharged at a constant current of 0.1C for two cycles in a voltage range of 2.0-3.75 V, and then charged and discharged at a constant current of 1C for one cycle; in the charge-discharge test at 1C, a capacity value at a discharge voltage of 3.2 V is extracted and recorded as C1, a capacity value upon discharging to 2.0 V is extracted and recorded as C2, and η = C1 / C2; where a charging process includes constant-voltage charging, with a constant voltage of 3.75 V and a constant-voltage cutoff current of 50 uA.

The capacity proportion η of the lithium iron phosphate particles can reflect the kinetic performance of the lithium iron phosphate particles, and can be adjusted by adjusting the average primary particle size, the carbon content, the proportion of the carbon source to the carbon film-forming agent, and the modifier and the content thereof of the lithium iron phosphate particles. The η value of the lithium iron phosphate particles of the present application is ≥ 88%, indicating good kinetic performance.

In any embodiment, the lithium iron phosphate particles satisfy at least one of (a) to (f):
a) a Dv10 of the lithium iron phosphate particles is ≥ 200 nm;
b) a Dv50 of the lithium iron phosphate particles is 500-5000 nm;
c) a Dv90 of the lithium iron phosphate particles is ≤ 10000 nm;
d) a Dv99 of the lithium iron phosphate particles is ≤ 12000 nm;
e) a powder compacted density of the lithium iron phosphate under a pressure of 3T is ≥ 2.25 g/cm³; or
f) a powder resistivity of the lithium iron phosphate is less than 60 Ω·cm.

By enabling the lithium iron phosphate particles to satisfy at least one of (a) to (g), the lithium iron phosphate particles can better achieve the technical effects of the present application.

In any embodiment, when the first positive electrode active layer includes lithium iron phosphate particles, and the second positive electrode active layer includes lithium nickel cobalt manganese oxide particles, a coating areal weight of the first positive electrode active layer is 0.02-0.38 g/1540 mm², and a coating areal weight of the second positive electrode active layer is 0.08-0.32 g/1540 mm²; or
when the first positive electrode active layer includes lithium nickel cobalt manganese oxide particles, and the second positive electrode active layer includes lithium iron phosphate particles, a coating areal weight of the first positive electrode active layer is 0.08-0.32 g/1540 mm², and a coating areal weight of the second positive electrode active layer is 0.02-0.38 g/1540 mm².

In some embodiments,
when the first positive electrode active layer includes lithium iron phosphate particles, and the second positive electrode active layer includes lithium nickel cobalt manganese oxide particles, a coating areal weight of the first positive electrode active layer is 0.05-0.32 g/1540 mm², and a coating areal weight of the second positive electrode active layer is 0.1-0.28 g/1540 mm²; or
when the first positive electrode active layer includes lithium nickel cobalt manganese oxide particles, and the second positive electrode active layer includes lithium iron phosphate particles, a coating areal weight of the first positive electrode active layer is 0.1-0.28 g/1540 mm², and a coating areal weight of the second positive electrode active layer is 0.05-0.32 g/1540 mm².

Controlling the areal weight of the first or second positive electrode active layer containing the lithium iron phosphate particles and the second or first positive electrode active layer containing the lithium nickel cobalt manganese oxide particles within the range of the present application helps to reduce the cost of the positive electrode active material while still obtaining a good specific capacity.

In any embodiment, a total thickness of the positive electrode active layer is 50-150 µm; in some embodiments, a total thickness of the positive electrode active layer is 60-90 µm.

In the present application, the thickness of the positive electrode active material helps to maintain better kinetic performance and volumetric energy density.

In any embodiment, the first positive electrode active layer includes lithium iron phosphate particles, and the second positive electrode active layer includes lithium nickel cobalt manganese oxide particles.

Placing the lithium iron phosphate particles in the first active layer is more conducive to improving the electrical performance of the secondary battery.

In any embodiment, the lithium iron phosphate particles are mainly obtained by a following preparation method:
providing raw materials containing at least a lithium source, an iron source, a phosphorus source, optionally a carbon film-forming agent, optionally a carbon source, and optionally a modifier, and performing sintering at least twice, where
a temperature of a first sintering is 500-760 °C, and in some embodiments, 550-720 °C; and
a temperature of a second sintering is 700-800 °C, and in some embodiments, 720-780 °C.

Compared to the conventional preparation method of achieving particle growth at a high temperature, the lithium iron phosphate particles of the present application are subjected to sintering twice. Controlling the temperatures of the two sintering processes is conducive to preparing the lithium iron phosphate particles having the average primary particle size and specific surface area of the present application. Furthermore, during conventional high-temperature sintering, the carbon coating layer on the surface of the particles is prone to cracking, reducing the integrity of the carbon coating. In the present application, synthesizing large particles at a low temperature is conducive to reducing floating carbon and improving the consistency and uniformity of the surface carbon coating.

In any embodiment, the lithium iron phosphate particles are mainly obtained by a following preparation method: providing raw materials containing at least a lithium source, an iron source, a phosphorus source, a carbon source, a carbon film-forming agent, and a modifier, and performing sintering at least twice, where
a carbon content of a material after a first sintering is 0.01-0.79 wt%, and in some embodiments, 0.05-0.4 wt%; and
a carbon content of a material after a second sintering is 0.8-2.0 wt%, and in some embodiments, 1.0-1.6 wt%.

In the preparation method of the examples of the present application, adding the carbon source before the first sintering can effectively reduce the trivalent iron in the raw materials and improve the product purity and stability. Furthermore, controlling the temperature of the first sintering and the carbon content of the intermediate after the first sintering within the above ranges helps to increase the primary particle size of the lithium iron phosphate particle precursor obtained after the first sintering. Specifically, during the first sintering, a lower carbon content is conducive to reducing the hindering effect of the carbon layer on the growth process of the lithium iron phosphate particles, and is conducive to the crystalline growth of the lithium iron phosphate particle precursor at a lower temperature. Additionally, the lower carbon content is also conducive to the solid-phase diffusion reaction between the possibly added modifier and the lithium iron phosphate material, thereby facilitating a relatively high concentration of metal ion doping. Controlling the temperature of the second sintering and the carbon content of the sintered material within the above ranges helps to better coat carbon on the surfaces of the lithium iron phosphate particles to form a uniform and dense carbon coating layer, which is conducive to improving the surface conductive performance of the lithium iron phosphate particles and improving the kinetic performance and specific capacity of the lithium iron phosphate particles.

In any embodiment, a preparation method for the lithium iron phosphate particles includes the following steps:
performing a first pulverization after the first sintering, and performing a second pulverization after the second sintering, where
a Dv50 of a product after the first pulverization is 300-1200 nm, and in some embodiments, 400-1100 nm; and
a Dv50 of a product after the second pulverization is 500-5000 nm, and in some embodiments, 700-2500 nm.

Controlling the Dv50 of the product after the first pulverization within the above range is conducive to reducing the hindering effect of the added carbon source and the possibly added doping elements on the crystal growth of the lithium iron phosphate particle precursor, which helps to prepare a micron-sized lithium iron phosphate particle precursor. Controlling the Dv50 value of the product after the second pulverization within the above range helps to obtain the lithium iron phosphate particles having the average primary particle size of the present application.

According to a second aspect of the present application, a secondary battery is provided. The secondary battery includes the positive electrode plate of the present application.

According to a third aspect of the present application, an electric device is provided. The electric device includes the positive electrode plate of the present application or the secondary battery of the present application.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

FIG. 1 is a cross-sectional view of a positive electrode plate in Example 3 of the present application, where FIG. 1a is a cross-sectional view of the positive electrode plate at a magnification of 1k, and FIG. 1b is a cross-sectional view of the positive electrode plate at a magnification of 3k.
FIG. 2 is a schematic view of a secondary battery according to an embodiment of the present application.
FIG. 3 is an exploded view of the secondary battery according to an embodiment of the present application shown in FIG. 2.
FIG. 4 is a schematic view of a battery module according to an embodiment of the present application.
FIG. 5 is a schematic view of a battery pack according to an embodiment of the present application.
FIG. 6 is an exploded view of the battery pack according to an embodiment of the present application shown in FIG. 5.
FIG. 7 is a schematic view of an electric device using a secondary battery as a power source according to an embodiment of the present application.
FIG. 8 is a scanning electron microscope image of lithium iron phosphate particles, with primary particle sizes marked thereon, according to an embodiment of the present application.

### Description of the reference numerals:

1: battery pack; 2: upper case body; 3: lower case body; 4: battery module; 5: secondary battery; 51: shell body; 52: electrode assembly; 53: top cover assembly.

### DETAILED DESCRIPTION

Hereinafter, embodiments specifically disclosing a positive electrode active material and a manufacturing method therefor, a positive electrode plate, a secondary battery, a battery module, a battery pack, and an electric device of the present application will be described in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a specific parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between "0 and 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the terms "include/comprise" and "contain" mentioned in the present application are open-ended or closed-ended. For example, the terms "include/comprise" and "contain" may mean that other unlisted components may also be included/comprised or contained or that only the listed components are included/comprised or contained.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Due to the relatively high cost of lithium nickel cobalt manganese oxide particles, the lithium nickel cobalt manganese oxide particles can be mixed with lithium iron phosphate to prepare a mixed positive electrode active layer coated on both the upper layer and the lower layer. Lithium iron phosphate particles have the problem of poor kinetic performance. To improve the electrical performance of lithium iron phosphate particles, the lithium iron phosphate particles are usually nano-sized; a smaller particle size and a larger specific surface area are conducive to improving the electron transport capability of the lithium iron phosphate particles. However, an excessively large specific surface area of the nano-sized lithium iron phosphate particles leads to severe water absorption of the nano-sized lithium iron phosphate particles. During the cycling process of a cell, an excessively high water content in the electrode plate easily leads to an increase in interfacial side reactions, thereby increasing the degree of gas generation. Additionally, a high specific surface area at a high voltage accelerates side reactions between the positive electrode active substance layer and an electrolytic solution, seriously compromising the safety performance of the secondary battery. Therefore, the mixed positive electrode active layer has a relatively severe gas generation. In the present application, by optimizing the process and formula of the lithium iron phosphate, the average primary particle size of the lithium iron phosphate particles is increased, the BET value of the lithium iron phosphate particles is reduced, and the average primary particle size and the BET value are controlled within a reasonable range, which reduces water absorption of the mixed positive electrode active material while ensuring the specific capacity of the mixed positive electrode active material.

### [Positive Electrode Plate]

Based on this, the present application provides a positive electrode plate; the positive electrode plate includes a current collector and a positive electrode active layer, and the positive electrode active layer is disposed on at least one surface of the current collector.

The positive electrode active layer includes a first positive electrode active layer formed at least on the current collector, and a second positive electrode active layer formed on a side, away from the current collector, of the first positive electrode active layer.

The first positive electrode active layer includes lithium iron phosphate particles, and the second positive electrode active layer includes lithium nickel cobalt manganese oxide particles; or,
the first positive electrode active layer includes lithium nickel cobalt manganese oxide particles, and the second positive electrode active layer includes lithium iron phosphate particles.

An average primary particle size of the lithium iron phosphate particles is 500-3000 nanometers (nm), and a specific surface area BET of the lithium iron phosphate particles is 3-8 square meters/gram (m²/g).

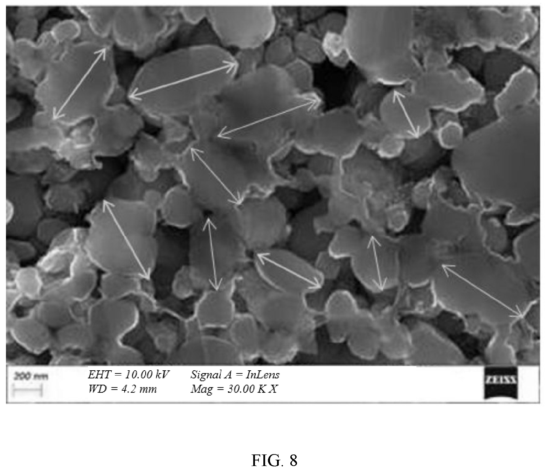

In the present application, the term "average primary particle size" refers to the average value of the primary particle sizes of all particles, where the primary particle size refers to the longest distance connecting two points on the edge in a cross-sectional image. In a specific embodiment, as shown in the scanning electron microscope image of the lithium iron phosphate particles in FIG. 8, line segments marked with double arrows in the particles are the primary particle sizes defined in the present application.

In the present application, the term "specific surface area" or "BET" refers to the total area of particles per unit mass; in the present application, the BET of the lithium iron phosphate particles is related to factors such as the average primary particle size of the lithium iron phosphate particles, the carbon content, the density of the carbon coating, and the degree of looseness and porosity of the particles.

In some embodiments, the lithium iron phosphate particles are primary particles.

Herein, the "primary particle" refers to the particle having no obvious agglomeration interface in the particle scanning electron microscope image, but possibly having tiny pores and point or line defects, and the primary particle is distinguished from the powder particle of the smallest unit, having no structure such as stacking or flocculation.

In some embodiments, the lithium iron phosphate particles are single crystal particles and/or polycrystalline particles.

Herein, the term "single crystal" refers to a structurally complete crystal grown from one crystal nucleus. The single crystal of the present application is an integral whole in the field of view of a transmission electron microscope image, and no grain boundaries exist inside the single crystal.

In some embodiments, the single crystal of the present application may have tiny defects, for example, having internal micropores or a small number of points and surfaces, or having a small number of particles adhered to each other on the surface of one particle.

Herein, the term "polycrystal" refers to the crystal formed by a randomly oriented combination of small single crystal particles, and grain boundaries exist inside the polycrystal.

In some embodiments, based on the total number of the lithium iron phosphate particles, the number proportion of single crystal particles is greater than or equal to 90%. Controlling the number proportion of single crystal particles within the above range results in a relatively high proportion of single crystal particles compared to polycrystals and secondary agglomerates, which is conducive to reducing the BET.

The average primary particle size of the lithium iron phosphate particles may be measured by methods and devices known in the art. For example, the test may be performed by using a scanning electron microscope and a long-diameter statistical method. As an example, an argon ion beam is applied perpendicularly to a major surface of the positive electrode plate to cut open the electrode plate and expose a cross section; the cross section is photographed using a scanning electron microscope, and the boundary between a first positive electrode active layer and a second positive electrode active layer on the cross section is clear; the long-diameter statistical method is used to perform the statistical analysis on particle sizes of the positive electrode active layer including the lithium iron phosphate particles; specifically, the total number of lithium iron phosphate particles having a primary particle size greater than 80 nm and the sum of primary particle sizes of the lithium iron phosphate particles having a primary particle size greater than 80 nm may be statistically calculated in a scanning electron microscope photograph, and the average primary particle size of the lithium iron phosphate particles = the primary particle sizes of all the lithium iron phosphate particles / the total number of the lithium iron phosphate particles. Since particles satisfying 0 < primary particle size ≤ 80 nm are prone to adhesion, there are relatively large errors in statistical calculation, and it is difficult to identify the particles separately. Therefore, during the statistical calculation of the primary particle size, particles satisfying 0 < primary particle size ≤ 80 nm are not within the statistical scope.

To improve the electrical performance of lithium iron phosphate particles, the lithium iron phosphate particles are usually nano-sized; a smaller particle size and a larger specific surface area are conducive to improving the electron transport capability of the lithium iron phosphate particles. However, an excessively large specific surface area of the nano-sized lithium iron phosphate particles leads to severe water absorption of the nano-sized lithium iron phosphate particles. During the cycling process of a cell, an excessively high water content in the electrode plate easily leads to an increase in interfacial side reactions, thereby increasing the degree of gas generation. This seriously compromises the safety performance of the secondary battery. Due to the above problems of the lithium iron phosphate particles, the gas generation problem of the positive electrode active material, in which the lithium iron phosphate particles and lithium nickel cobalt manganese oxide particles are coated in mixed upper and lower layers, is also very prominent. In the present application, the average primary particle size of the lithium iron phosphate particles is controlled to be 500-3000 nm, and the specific surface area of the lithium iron phosphate particles is further adjusted to 3-8 m²/g. A relatively low specific surface area has a relatively low specific surface energy, which is conducive to reducing the water absorption of the material, thereby reducing the water content of the positive electrode active material during processing and storage. Additionally, a relatively low specific surface area is also conducive to improving the volatility of water in the material, which is conducive to further reducing the water content of the positive electrode active material. However, an excessively large particle size and an excessively low specific surface area will affect the kinetic performance of the lithium iron phosphate particles, thus reducing the specific capacity of the positive electrode active material. The positive electrode active material of the present application increases the average primary particle size of the lithium iron phosphate particles and reduces the specific surface area of the lithium iron phosphate particles, and the average primary particle size and the specific surface area are controlled within a reasonable range, such that the water content of the positive electrode active material is greatly reduced, and the active specific surface area for the reaction at a high voltage is also reduced, thereby reducing the degree of gas generation of the secondary battery, improving the safety performance and cycle performance of the secondary battery, while also ensuring the specific capacity of the positive electrode active material.

In some embodiments, the average primary particle size of the lithium iron phosphate particles is 650-2500 nm.

In some embodiments, the average primary particle size of the lithium iron phosphate particles may be 500 nm, 550 nm, 600 nm, 650 nm, 700 nm, 730 nm, 750 nm, 780 nm, 800 nm, 830 nm, 850 nm, 870 nm, 900 nm, 950 nm, 1000 nm, 1100 nm, 1200 nm, 1300 nm, 1400 nm, 1500 nm, 2000 nm, 2100 nm, 2200 nm, 2300 nm, 2400 nm, 2500 nm, 2600 nm, 2700 nm, 2800 nm, 2900 nm, 3000 nm, or a numerical value within a range defined by any two of the aforementioned average primary particle sizes.

Controlling the average primary particle size of the lithium iron phosphate particles within an appropriate range is conducive to further balancing the degree of gas generation and the specific capacity of the secondary battery.

In some embodiments, the specific surface area BET of the lithium iron phosphate particles is 4-7 m²/g.

In some embodiments, the specific surface area BET of the lithium iron phosphate particles may be 3 m²/g, 3.5 m²/g, 4 m²/g, 4.5 m²/g, 5 m²/g, 5.5 m²/g, 6 m²/g, 6.5 m²/g, 7 m²/g, 7.5 m²/g, 8 m²/g, or a numerical value within a range defined by any two of the aforementioned specific surface areas BET.

The specific surface area BET of the particles may be measured by methods and devices known in the art. For example, the test may be performed with reference to GB/T 19587-2017. As an example, lithium iron phosphate particles are taken as a sample and placed into a sample tube, and the sample tube is immersed in liquid nitrogen at -196 degrees Celsius (°C); the adsorption amount of nitrogen gas on a solid surface under different pressures is determined at a relative pressure of 0.05-0.30, and a monolayer adsorption amount of the sample is calculated based on the BET multilayer adsorption theory and the formula thereof, thereby obtaining the specific surface area of the sample.

An excessively high BET of the lithium iron phosphate particles will increase the water absorption thereof, causing severe gas generation in the secondary battery. An excessively low BET of the lithium iron phosphate particles will reduce the specific capacity thereof. Controlling the BET of the lithium iron phosphate particles within 4-7 m²/g is conducive to further balancing the degree of gas generation and the specific capacity of the secondary battery.

In some embodiments, calculated based on a total weight of the lithium iron phosphate particles, a carbon content of the lithium iron phosphate particles is Cx wt%, and a ratio z of the specific surface area BET of the lithium iron phosphate particles to Cx satisfies 1.5 ≤ z ≤ 8.5.

In some embodiments, the ratio z of the specific surface area BET of the lithium iron phosphate particles to Cx satisfies 3 ≤ z ≤ 6.

In some embodiments, the z may be 1.5, 1.8, 2, 2.3, 2.5, 2.8, 3, 3.2, 3.5, 3.8, 4, 4.3, 4.5, 4.8, 5, 5.3, 5.5, 5.8, 6, 6.3, 6.5, 6.8, 7, 7.3, 7.5, 7.8, 8, 8.3, 8.5, or a numerical value within a range defined by any two of the aforementioned z values.

In the present application, the ratio z of the specific surface area BET of the lithium iron phosphate particles to Cx can characterize the uniform density of the carbon contained in the lithium iron phosphate particles. When the average primary particle size and the carbon content of the lithium iron phosphate particles remain unchanged, the lower the ratio z is, the higher the coating utilization rate of the carbon in the particles is, the less floating carbon there is, and the more uniform and dense the carbon contained in the lithium iron phosphate particles is. Increasing the uniform density of the contained carbon is conducive to improving the kinetic performance and specific capacity of the lithium iron phosphate particles. However, an excessively high carbon density may affect the intercalation and deintercalation of lithium ions, thereby affecting the kinetic performance and specific capacity of the secondary battery to a certain extent. The range of the ratio z in the present application is conducive to allowing the carbon contained in the lithium iron phosphate particles to have a suitable uniform density, which is conducive to improving the conductive performance of the surfaces of the particles and further improving the specific capacity and the kinetic performance of the secondary battery. Furthermore, the discharge performance requirements of lithium nickel cobalt manganese oxide particles are relatively high. In the double-layer positive electrode active material, improving the kinetic performance of the lithium iron phosphate particles is more conducive to the coordinated discharge of the lithium iron phosphate particles and the lithium nickel cobalt manganese oxide particles, which is conducive to further improving the overall kinetic performance of the positive electrode active material.

In some embodiments, calculated based on the total weight of the lithium iron phosphate particles, the carbon content of the lithium iron phosphate particles is 0.8-2.0 wt%.

In some embodiments, calculated based on the total weight of the lithium iron phosphate particles, the carbon content of the lithium iron phosphate particles is 1.0-1.6 wt%.

In some embodiments, calculated based on the total weight of the lithium iron phosphate particles, the carbon content of the lithium iron phosphate particles is 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, 2.0 wt%, or a numerical value within a range defined by any two of the aforementioned carbon contents.

The carbon content of the iron phosphate particles may be measured by methods and devices known in the art. For example, the test may be performed with reference to GB/T 20123-2006/ISO 15350:2000.

In some embodiments, the carbon contained in the lithium iron phosphate particles is coated on the surfaces of the particles. In some embodiments, the carbon contained in the lithium iron phosphate particles is embedded in the particles. In some embodiments, the carbon contained in the lithium iron phosphate particles is partially coated on the surfaces of the particles and partially embedded in the particles.

Increasing the carbon content of the lithium iron phosphate particles helps to improve the specific capacity of the secondary battery, but an excessively high carbon content may increase the degree of water absorption. In the present application, the carbon content range helps to further improve the specific capacity of the secondary battery while reducing the effect on the water absorption degree of the secondary battery.

In some embodiments, the lithium iron phosphate particles have a molecular formula Liₘ₁Feₓ₁P_{y1}O_{z1}Q_{q1}, where Q includes at least one of Al, Na, K, Mg, Cu, Mn, Cr, Zn, Pb, Ca, Co, Ni, Sr, Nb, V, Ti, B, S, Si, N, F, Cl, or Br, 0.95 ≤ m1 ≤ 1.15, 0.9 ≤ x1 ≤ 1, 0.95 ≤ y1 ≤ 1, 3.5 ≤ z1 ≤ 4, and 0 < q1 ≤ 0.1, and/or
the lithium nickel cobalt manganese oxide particles have a molecular formula LiRₓ₂Ni_{y2}Co_{z2}Mn_{1-x2-y2-z2}O₂, where R includes at least one of Cr, Ti, V, Mg, Al, or Nb, 0 ≤ x2 < 1, 0 < y2 < 1, 0 < z2 < 1, and 0 < x2 + y2 + z2 < 1.

In some embodiments, the lithium iron phosphate particles have a molecular formula Liₘ₁Feₓ₁P_{y1}O_{z1}Q_{q1}, where m1 may be 0.95, 0.98, 1.00, 1.03, 1.05, 1.08, 1.10, 1.13, or 1.15, x1 may be 0.9 or 1.0, y1 may be 0.95, 0.98, 1.00, 1.03, 1.05, 1.08, 1.10, 1.13, or 1.15, z1 may be 3.5, 3.6, 3.7, 3.8, 3.9, or 4, and q1 may be 0, 0.01, 0.02, 0.03, 0.04, 0.05, 0.06, 0.07, 0.08, 0.09, or 0.1.

In some embodiments, Q includes at least one of Ti, V, Mg, or Nb. In some embodiments, Q is Ti.

In some embodiments, the lithium nickel cobalt manganese oxide particles have a molecular formula LiRₓ₂Ni_{y2}Co_{z2}Mn_{1-x2-y2-z2}O₂, where x2 may be 0, 0.1, 0.2, 0.3, 0.4, 0.5, 0.6, 0.7, 0.8, 0.9, or 0.95, y2 may be 0, 0.1, 0.2, 0.3, 0.4, 0.5, 0.6, 0.7, 0.8, 0.9, or 0.95, z2 may be 0, 0.1, 0.2, 0.3, 0.4, 0.5, 0.6, 0.7, 0.8, 0.9, or 0.95, and 0 < x2 + y2 + z2 < 1. In some embodiments, the content ratio of the lithium element to the oxygen element in the lithium nickel cobalt manganese oxide particles fluctuates during the formation and cycling processes of the battery.

Doping the above elements into the lithium iron phosphate particles and/or the lithium nickel cobalt manganese oxide particles helps to improve the ion transport capability of the positive electrode active material. The above elements can create vacancies in the particle lattice or change the interatomic bond length, facilitating the movement of lithium ions in the lattice, thereby effectively improving the conductive performance of the particles themselves and improving the kinetic performance and specific capacity of the positive electrode active material. Furthermore, the discharge performance requirements of lithium nickel cobalt manganese oxide particles are relatively high. In the double-layer positive electrode active material, improving the kinetic performance of the lithium iron phosphate particles is more conducive to the coordinated discharge of the lithium iron phosphate particles and the lithium nickel cobalt manganese oxide particles, which is conducive to further improving the overall kinetic performance of the positive electrode active material.

In some embodiments, calculated based on a total weight of the lithium iron phosphate particles, a content of Q in the lithium iron phosphate particles is 1000-10000 parts per million (1000-10000 ppm).

In some embodiments, calculated based on the total weight of the lithium iron phosphate particles, the content of Q in the lithium iron phosphate particles is 2500-6000 ppm.

In some embodiments, calculated based on the total weight of the lithium iron phosphate particles, the content of Q in the lithium iron phosphate particles is 1000 ppm, 2000 ppm, 2500 ppm, 3000 ppm, 3500 ppm, 4000 ppm, 4500 ppm, 5000 ppm, 5500 ppm, 6000 ppm, 6500 ppm, 7000 ppm, 7500 ppm, 8000 ppm, 8500 ppm, 9000 ppm, 9500 ppm, 10000 ppm, or a numerical value within a range defined by any two of the aforementioned Q contents.

The content of Q, for example, the content of Ti, in the lithium iron phosphate particles may be measured by methods and devices known in the art. For example, the test may be performed with reference to GB/T 33822-2017.

The content of element Q in the existing lithium iron phosphate particles is generally low, or no element Q is added. Increasing the content of element Q in the lithium iron phosphate particles helps to further improve the bulk-phase ion transport capability of the lithium iron phosphate particles. However, with the further increase in the content of element Q, the bulk-phase ion transport capability may not continuously increase, and the average primary particle size of the lithium iron phosphate particles may also be affected. The range of the element Q in the present application helps to balance the average primary particle size of the positive electrode active material on the basis of further improving the kinetic performance and specific capacity of the positive electrode active material.

In some embodiments, a capacity proportion η of the lithium iron phosphate particles is ≥ 88%, and η is defined as follows:
A battery having the lithium iron phosphate particles as a positive electrode active material is charged and discharged at a constant current of 0.1C for two cycles in a voltage range of 2.0-3.75 volts (V), and then charged and discharged at a constant current of 1C for one cycle; in the charge-discharge test at 1C, a capacity value at a discharge voltage of 3.2 V is extracted and recorded as C1, a capacity value upon discharging to 2.0 V is extracted and recorded as C2, and η = C1 / C2. The charging process includes constant-voltage charging, with a constant voltage of 3.75 V and a constant-voltage cutoff current of 50 microamperes (uA).

In some embodiments, the capacity proportion η of the lithium iron phosphate particles may be 88%, 89%, 90%, 91%, 92%, 93%, 94%, 95%, or a numerical value within a range defined by any two of the aforementioned η values.

The η value of the lithium iron phosphate particles may be measured by methods and devices known in the art. As an example, a coin cell is first prepared using the lithium iron phosphate particles as a positive electrode active material. The specific preparation process of the coin cell is as follows: 2.0000 grams (g) of the lithium iron phosphate particles is mixed with 0.1111 g of conductive carbon black and 0.1111 g of polyvinylidene fluoride, and then the mixture is added to 2.5 g of an organic solvent N-methylpyrrolidone, followed by full and uniform mixing to form a slurry. The slurry is coated on an aluminum foil with a coating thickness of 140 micrometers (µm); the coated aluminum foil is vacuum-dried at 120 °C for 2 hours (h) and punched into a circular disc with a diameter of 13 millimeters (mm) using a punch. The circular disc is pressed at 10 megapascals (MPa) using a tablet press and kept under vacuum at 120 °C for 12 h to obtain a positive electrode plate. The positive electrode plate is weighed, where the loading capacity of the lithium iron phosphate particles is 11-12 milligrams (mg). The coin cell is assembled in an argon-protected glove box, where a lithium metal foil is used as the negative electrode, the electrolytic solution is a mixed solvent of EC (ethylene carbonate) and DMC (1,2-dimethyl carbonate) at a volume ratio of 1:1, the electrolyte is LiPF₆, and the separator is a Celgard 2400 microporous polyethylene film.

Electrical properties of the prepared coin cell are tested on a LAND battery tester. Specifically, the coin cell is charged and discharged at a constant current of 0.1C for two cycles in a voltage range of 2.0-3.75 V, and then charged and discharged at a constant current of 1C for one cycle; in the charge-discharge test at 1C, the capacity value at the discharge voltage of 3.2 V is extracted and recorded as C1, the capacity value upon discharging to 2.0 V is extracted and recorded as C2, and η = C1 / C2. The charging process includes constant-voltage charging, with a constant voltage of 3.75 V and a constant-voltage cutoff current of 50 uA.

The capacity proportion η of the lithium iron phosphate particles can reflect the kinetic performance and plateau retention performance of the lithium iron phosphate particles, and can be adjusted by adjusting the average primary particle size, the carbon content, the proportion of the carbon source to the carbon film-forming agent, and the modifier and the content thereof of the lithium iron phosphate particles. The η value of the lithium iron phosphate particles of the present application is ≥ 88%, indicating good kinetic performance. Additionally, when the η value is relatively high, and the secondary battery is discharged to a low SOC (State of Charge of the battery), the secondary battery can still maintain good power performance. That is, when a battery with a high η value is discharged at a low power level and a large current, the voltage drop value of the battery is relatively small.

In some embodiments, the lithium iron phosphate particles satisfy at least one of (a) to (f):
a) a Dv10 of the lithium iron phosphate particles is ≥ 200 nm;
b) a Dv50 of the lithium iron phosphate particles is 500-5000 nm;
c) a Dv90 of the lithium iron phosphate particles is ≤ 10000 nm;
d) a Dv99 of the lithium iron phosphate particles is ≤ 12000 nm;
e) a powder compacted density of the lithium iron phosphate under a pressure of 3T is ≥ 2.25 grams/cubic centimeter (g/cm³); or
f) a powder resistivity of lithium iron phosphate is less than 60 ohm-centimeters (Ω·cm).

Herein, the term "Dv10" refers to the corresponding particle size when the cumulative volume particle size distribution percentage of particles reaches 10%.

Herein, the term "Dv90" refers to the corresponding particle size when the cumulative volume particle size distribution percentage of particles reaches 90%.

Herein, the term "Dv99" refers to the corresponding particle size when the cumulative volume particle size distribution percentage of particles reaches 99%.

Herein, the term "powder compacted density" refers to the density of a compact (in g/cm³) having a certain density and strength formed during a compression process under an external force, where, with the movement and deformation of the powder, larger voids are filled, and the contact area between particles increases, thereby generating interatomic attractive forces and enhancing mechanical interlocking between the particles.

In some embodiments, the Dv10 of the lithium iron phosphate particles is < Dv50.

In some embodiments, the Dv90 of the lithium iron phosphate particles is > Dv50.

In some embodiments, the Dv50 of the lithium iron phosphate particles may be 500 nm, 600 nm, 700 nm, 800 nm, 900 nm, 1000 nm, 1100 nm, 1200 nm, 1300 nm, 1400 nm, 1500 nm, 1700 nm, 1900 nm, 2000 nm, 2300 nm, 2500 nm, 2700 nm, 2900 nm, 3000 nm, 3200 nm, 3400 nm, 3600 nm, 3800 nm, 4000 nm, 4200 nm, 4400 nm, 4600 nm, 4800 nm, 5000 nm, or a numerical value within a range defined by any two of the aforementioned Dv50 values of products after a second pulverization.

The Dv10, Dv50, Dv90, and Dv99 of the lithium iron phosphate particles may be measured by methods and devices known in the art. For example, determination may be performed using a laser particle size analyzer (Malvern Master Size 3000) with reference to GB/T19077.1-2016.

The powder compacted density of the lithium iron phosphate particles under different pressures may be measured by methods and devices known in the art. For example, measurement may be performed using a compacted density instrument with reference to GB/T 24533-2009. Specifically, a certain amount of the lithium iron phosphate particles is placed in a special compaction mold (with a known mold diameter), and the mold features a hollow center with a metal disc at both the top and the bottom. The lithium iron phosphate particles are placed between the metal discs, a metal cylinder is placed on the top, and the mold is placed on the compacted density instrument. Different pressures (e.g., 3T) are set, and the thickness of the lithium iron phosphate particles under different pressures can be read on the device. The powder compacted density of the lithium iron phosphate particles is ρ = m/v, where v = (S × H), m represents the mass of the lithium iron phosphate particles, S represents the bottom area of the mold, and H represents the thickness of the compacted lithium iron phosphate particles.

The powder resistivity of the lithium iron phosphate particles may be measured by methods and devices known in the art. For example, measurement may be performed using a powder resistivity meter (Suzhou Jingge, model ST2722) with reference to GB/T 33822-2017. Specifically, a certain amount of the lithium iron phosphate particles (e.g., 1 g) is weighed and added to the feeding chamber of the powder resistivity meter. A pressure of 8 MPa is applied, and the forward resistivity and the reverse resistivity of the lithium iron phosphate particles are tested separately. The average value of the forward resistivity and the reverse resistivity is taken as the powder resistivity of the lithium iron phosphate particles.

By making the lithium iron phosphate particles satisfy at least one of (a) to (g), the lithium iron phosphate particles can better achieve the technical effects of the present application.

In some embodiments, when the first positive electrode active layer includes lithium iron phosphate particles and the second positive electrode active layer includes lithium nickel cobalt manganese oxide particles, a coating areal weight of the first positive electrode active layer is 0.02-0.38 g/1540 mm², and a coating areal weight of the second positive electrode active layer is 0.08-0.32 g/1540 mm².

When the first positive electrode active layer includes lithium nickel cobalt manganese oxide particles and the second positive electrode active layer includes lithium iron phosphate particles, a coating areal weight of the first active layer is 0.08-0.32 g/1540 mm², and a coating areal weight of the second positive electrode active layer is 0.02-0.38 g/1540 mm².

In some embodiments, when the first positive electrode active layer includes lithium iron phosphate particles and the second positive electrode active layer includes lithium nickel cobalt manganese oxide particles, a coating areal weight of the first positive electrode active layer is 0.05-0.32 g/1540 mm², and a coating areal weight of the second positive electrode active layer is 0.1-0.28 g/1540 mm².

When the first positive electrode active layer includes lithium nickel cobalt manganese oxide particles and the second positive electrode active layer includes lithium iron phosphate particles, a coating areal weight of the first active layer is 0.1-0.28 g/1540 mm², and a coating areal weight of the second positive electrode active layer is 0.05-0.32 g/1540 mm²².

In some embodiments, the coating areal weight of the first or second layer of the positive electrode active material containing the lithium iron phosphate particles may be 0.02 g/1540 mm², 0.04 g/1540 mm², 0.06 g/1540 mm², 0.08 g/1540 mm², 0.10 g/1540 mm², 0.12 g/1540 mm², 0.14 g/1540 mm², 0.15 g/1540 mm², 0.16 g/1540 mm², 0.18 g/1540 mm², 0.20 g/1540 mm², 0.22 g/1540 mm², 0.24 g/1540 mm², 0.26 g/1540 mm², 0.28 g/1540 mm², 0.30 g/1540 mm², 0.32 g/1540 mm², 0.34 g/1540 mm², 0.36 g/1540 mm², 0.38 g/1540 mm², or a numerical value within a range defined by any two of the aforementioned coating areal weights; the coating areal weight of the second or first positive electrode active material containing lithium nickel cobalt manganese oxide particles may be 0.08 g/1540 mm², 0.10 g/1540 mm², 0.12 g/1540 mm², 0.14 g/1540 mm², 0.16 g/1540 mm², 0.18 g/1540 mm², 0.20 g/1540 mm², 0.22 g/1540 mm², 0.24 g/1540 mm², 0.25 g/1540 mm², 0.26 g/1540 mm², 0.28 g/1540 mm², 0.30 g/1540 mm², 0.32 g/1540 mm², or a numerical value within a range defined by any two of the aforementioned coating areal weights.

The coating areal weights of the first positive electrode active layer and the second positive electrode active layer may be measured by methods and devices known in the art. As an example, a circular disc of 1540 mm² is punched out from the positive electrode plate; the current collector, the first positive electrode active layer, and the second positive electrode active layer are separated, and the second positive electrode active layer and the second positive electrode active layer are weighed.

Controlling the areal weight of the first or second positive electrode active layer containing the lithium iron phosphate particles and the second or first positive electrode active layer containing the lithium nickel cobalt manganese oxide particles within the range of the present application helps to reduce the cost of the positive electrode active material while still obtaining a good specific capacity.

In some embodiments, a total thickness of the positive electrode active layer is 50-150 µm.

In some embodiments, a total thickness of the positive electrode active layer is 60-90 µm.

In some embodiments, the total thickness of the positive electrode active layer may be 50 µm, 55 µm, 60 µm, 65 µm, 70 µm, 75 µm, 80 µm, 85 µm, 90 µm, 95 µm, 100 µm, 110 µm, 120 µm, 130 µm, 140 µm, 150 µm, or a numerical value within a range defined by any two of the aforementioned total thicknesses of the positive electrode active layer.

The thickness of the positive electrode active layer may be obtained by measuring with a micrometer caliper.

In the present application, the thickness of the positive electrode active material helps to maintain better kinetic performance and volumetric energy density.

In some embodiments, the first positive electrode active layer includes lithium iron phosphate particles, and the second positive electrode active layer includes lithium nickel cobalt manganese oxide particles.

The compacted density of the lithium iron phosphate particles is lower than the compacted density of the lithium nickel cobalt manganese oxide particles. When the lithium iron phosphate particles are located in the second positive electrode active layer away from the current collector, voids will decrease during the cold pressing of the electrode plate, thereby affecting the wetting of the electrolytic solution, causing an increase in the positive electrode polarization, and affecting the cell performance to a certain extent. Additionally, the lithium iron phosphate particles may also serve as a conductive transition layer between the current collector and the lithium nickel cobalt manganese oxide particles, which is conducive to improving the conductivity of the electrode. Therefore, placing the lithium iron phosphate particles in the first active layer is more conducive to improving the electrical performance of the secondary battery.

In some embodiments, the lithium iron phosphate particles are mainly obtained by a following preparation method:
providing raw materials containing at least a lithium source, an iron source, a phosphorus source, optionally a carbon film-forming agent, optionally a carbon source, and optionally a modifier, and performing sintering at least twice, where
a temperature of a first sintering is 500-760 °C, and in some embodiments, 550-720 °C; and
a temperature of a second sintering is 700-800 °C, and in some embodiments, 720-780 °C.

In some embodiments, the temperature of the first sintering may be 500 °C, 530 °C, 550 °C, 580 °C, 600 °C, 630 °C, 650 °C, 680 °C, 700 °C, 710 °C, 720 °C, 730 °C, 740 °C, 750 °C, 760 °C, or a numerical value within a range defined by any two of the aforementioned temperatures of the first sintering; the temperature of the second sintering may be 700 °C, 710 °C, 720 °C, 730 °C, 740 °C, 750 °C, 760 °C, 770 °C, 780 °C, 790 °C, 800 °C, or a numerical value within a range defined by any two of the aforementioned temperatures of the second sintering.

In some embodiments, heating rates of the first sintering and the second sintering are each independently 2-20 degrees Celsius/minute (°C/min).

In some embodiments, the heating rates of the first sintering and the second sintering are each independently 2 °C/min, 5 °C/min, 7 °C/min, 10 °C/min, 13 °C/min, 15 °C/min, 17 °C/min, or 20 °C/min.

In some embodiments, a constant-temperature sintering time of the first sintering is 1-6 h. In some embodiments, the constant-temperature sintering time of the first sintering may be 1 h, 1.5 h, 2 h, 2.5 h, 3 h, 3.5 h, 4 h, 4.5 h, 5 h, 5.5 h, or 6 h.

In some embodiments, a constant-temperature sintering time of the second sintering is 2-12 h. In some embodiments, the constant-temperature sintering time of the second sintering may be 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 10.5 h, 11 h, 11.5 h, or 12 h.

Compared to the conventional preparation method of achieving particle growth at a high temperature, the lithium iron phosphate particles of the examples of the present application are subjected to sintering twice. Controlling the temperatures of the two sintering processes is conducive to preparing the lithium iron phosphate particles having the average primary particle size and specific surface area of the present application. Furthermore, controlling the heating rate, the sintering temperature, and the constant-temperature sintering time of the first sintering and/or the second sintering helps to reduce side reactions, thereby better preparing the lithium iron phosphate particles of the present application. Furthermore, during conventional high-temperature sintering, the carbon coating layer on the surface of the particles is prone to cracking, reducing the integrity of the carbon coating. In the present application, synthesizing large particles at a low temperature is conducive to improving the consistency and uniformity of surface carbon coating.

In some embodiments, the lithium iron phosphate particles are mainly obtained by a following preparation method: providing raw materials containing at least a lithium source, an iron source, a phosphorus source, a carbon source, a carbon film-forming agent, and a modifier, and performing sintering at least twice, where
a carbon content of a material after a first sintering is 0.01-0.79 wt%, and in some embodiments, 0.05-0.4 wt%; and
a carbon content of a material after a second sintering is 0.8-2.0 wt%, and in some embodiments, 1.0-1.6 wt%.

In some embodiments, the carbon content of the material after the first sintering may be 0.01 wt%, 0.05 wt%, 0.1 wt%, 0.15 wt%, 0.20 wt%, 0.25 wt%, 0.30 wt%, 0.35 wt%, 0.40 wt%, 0.45 wt%, 0.50 wt%, 0.55 wt%, 0.60 wt%, 0.65 wt%, 0.70 wt%, 0.75 wt%, 0.79 wt%, or a numerical value within a range defined by any two of the aforementioned carbon contents; the carbon content of the material after the second sintering may be 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, 2.0 wt%, or a numerical value within a range defined by any two of the aforementioned carbon contents.

In the preparation method of the examples of the present application, adding the carbon source before the first sintering can effectively reduce the trivalent iron in the raw materials and improve the product purity and stability. Furthermore, controlling the temperature of the first sintering and the carbon content of the intermediate after the first sintering within the above ranges helps to increase the primary particle size of the lithium iron phosphate particle precursor obtained after the first sintering. Specifically, during the first sintering, a lower carbon content is conducive to reducing the hindering effect of the carbon layer on the growth process of the lithium iron phosphate particles, and is conducive to the crystalline growth of the lithium iron phosphate particle precursor at a lower temperature. Additionally, the lower carbon content is also conducive to the solid-phase diffusion reaction between the possibly added modifier and the lithium iron phosphate material, thereby facilitating a relatively high concentration of metal ion doping. Controlling the temperature of the second sintering and the carbon content of the sintered material within the above ranges helps to better coat carbon on the surfaces of the lithium iron phosphate particles to form a uniform and dense carbon coating layer, which is conducive to improving the surface conductive performance of the lithium iron phosphate particles and improving the kinetic performance and specific capacity of the lithium iron phosphate particles.

In some embodiments, raw materials containing a lithium source, an iron source, a phosphorus source, a carbon source, a modifier, and a carbon film-forming agent are at least provided and subjected to sintering at least twice.

In some embodiments, calculated by the atomic molar number of each element, a mixing ratio of the lithium source, the iron source, and the phosphorus source satisfies Fe: P = (0.96-0.985):1 and Li: Fe = (1.0-0.95):1.1.

In some embodiments, calculated by the atomic molar number of each element, the mixing ratio of the iron source and the phosphorus source satisfies Fe: P = 0.96:1, Fe: P = 0.965:1, Fe: P = 0.97:1, Fe: P = 0.975:1, Fe: P = 0.98:1, or Fe: P = 0.985:1.

In some embodiments, calculated by the atomic molar number of each element, the mixing ratio of the lithium source and the iron source satisfies Li: Fe = 1.0:1.1, Li: Fe = 0.99:1.1, Li: Fe = 0.98:1.1, Li: Fe = 0.97:1.1, Li: Fe = 0.96:1.1, or Li: Fe = 0.95:1.1.

In some embodiments, a weight ratio of the carbon source to the carbon film-forming agent is (9-0.25):1. In some embodiments, the weight ratio of the carbon source to the carbon film-forming agent may be 9:1, 8:1, 7:1, 6:1, 5:1, 4:1, 3:1, 2:1, 1:1, 0.8:1, 0.5:1, or 0.25:1.

In some embodiments, the lithium source is a lithium-containing compound. In some embodiments, the lithium source includes at least one of lithium dihydrogen phosphate, lithium oxalate, lithium carbonate, lithium oxide, lithium hydroxide, or lithium acetate. In some embodiments, the lithium source includes lithium carbonate.

In some embodiments, the iron source is an iron-containing compound. In some embodiments, the iron source includes at least one of iron hydroxide, ferrous chloride, ferric oxide, iron phosphate, ferric pyrophosphate, ferrous oxalate, iron powder, ferric nitrate, triiron tetraoxide, or iron oxyhydroxide. In some embodiments, the iron source includes ferric oxide.

In some embodiments, the phosphorus source is a phosphate compound. In some embodiments, the phosphorus source includes at least one of phosphoric acid, ammonium dihydrogen phosphate, or diammonium hydrogen phosphate. In some embodiments, the phosphorus source includes phosphoric acid.

In some embodiments, the carbon source includes at least one of citric acid, glucose, sucrose, starch, fructose, or lactose. In some embodiments, the carbon source includes glucose.

In some embodiments, the carbon film-forming agent includes at least one of polyethylene glycol, polyaniline, polyacrylonitrile, polyvinylpyrrolidone, or polyvinyl alcohol. In some embodiments, the carbon film-forming agent includes polyaniline.

In some embodiments, the modifier includes at least one of titanium dioxide, vanadium pentoxide, tetrabutyl titanate, ammonium metavanadate, niobium ethoxide, niobium oxalate, niobium pentoxide, magnesium hydroxide, or magnesium nitrate. In some embodiments, the modifier includes titanium dioxide.

Using the raw materials in the above ratios is conducive to forming the lithium iron phosphate particles of the present application.

In some embodiments, a preparation method for the lithium iron phosphate particles includes the following steps:
performing a first pulverization after the first sintering, and performing a second pulverization after the second sintering, where
a Dv50 of a product after the first pulverization is 300-1200 nm, and in some embodiments, 400-1100 nm; and
a Dv50 of a product after the second pulverization is 500-5000 nm, and in some embodiments, 700-2500 nm.

In the present application, the term "Dv50" refers to the corresponding particle size when the cumulative volume particle size distribution percentage of particles reaches 50%.

In some embodiments, the Dv50 of the product after the first pulverization may be 300 nm, 400 nm, 500 nm, 600 nm, 700 nm, 800 nm, 900 nm, 1000 m, 1100 nm, 1200 nm, or a numerical value within a range defined by any two of the aforementioned Dv50 values of the product after the first pulverization.

In some embodiments, the Dv50 of the product after the second pulverization may be 500 nm, 600 nm, 700 nm, 800 nm, 900 nm, 1000 nm, 1100 nm, 1200 nm, 1300 nm, 1400 nm, 1500 nm, 1700 nm, 1900 nm, 2000 nm, 2300 nm, 2500 nm, 2700 nm, 2900 nm, 3000 nm, 3200 nm, 3400 nm, 3600 nm, 3800 nm, 4000 nm, 4200 nm, 4400 nm, 4600 nm, 4800 nm, 5000 nm, or a numerical value within a range defined by any two of the aforementioned Dv50 values of the product after the second pulverization.

In some embodiments, the pulverization includes one or more of mechanical crushing, grinding, sand milling, and jet milling.

The Dv50 of the particles may be measured using methods and devices commonly used in the art. As an example, determination may be performed using a laser particle size analyzer (Malvern Master Size 3000) with reference to GB/T 19077.1-2016.

Controlling the Dv50 of the product after the first pulverization within the above range is conducive to reducing the hindering effect of the added carbon source and the possibly added doping elements on the crystal growth of the lithium iron phosphate particle precursor, which helps to prepare a micron-sized lithium iron phosphate particle precursor. Controlling the Dv50 value of the product after the second pulverization within the above range helps to obtain the lithium iron phosphate particles having the average primary particle size of the present application.

In some embodiments, the positive electrode plate includes a positive electrode current collector and a positive electrode film layer disposed on at least one surface of the positive electrode current collector. The positive electrode film layer includes a positive electrode active material, a binder, and a conductive agent, and the positive electrode active material is the positive electrode active material of the examples of the present application or a positive electrode active material prepared by the preparation method of the examples of the present application.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), or polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, or a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), or polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, or a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application does not specifically limit the type of the electrolyte, which may be selected based on requirements. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, or lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, or diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separator]

In some embodiments, the secondary battery further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, or polyvinylidene fluoride. The separator may be a single-layer film or a multi-layer composite film, which is not specified. When the separator is a multi-layer composite film, the materials of the layers may be the same or different, which is not specified.

In some embodiments, the positive electrode plate, the negative electrode plate, and the separator may be manufactured into an electrode assembly through a winding process or a stacking process.

In some embodiments, the secondary battery may include an outer packaging. The outer packaging may be configured to package the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

### [Secondary Battery]

The present application provides a secondary battery. The secondary battery includes the positive electrode plate of the examples of the present application.

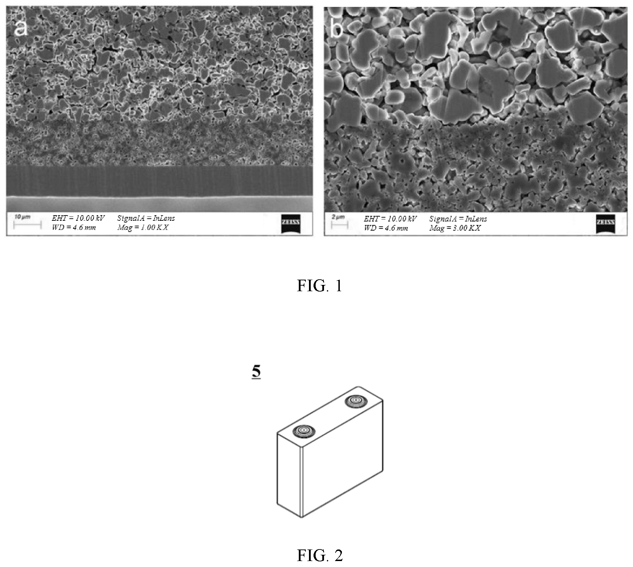

The present application does not particularly limit the shape of the secondary battery, and it may have a cylindrical shape, a prismatic shape, or any other shape. For example, FIG. 2 shows a secondary battery 5 having a prismatic structure as one example.

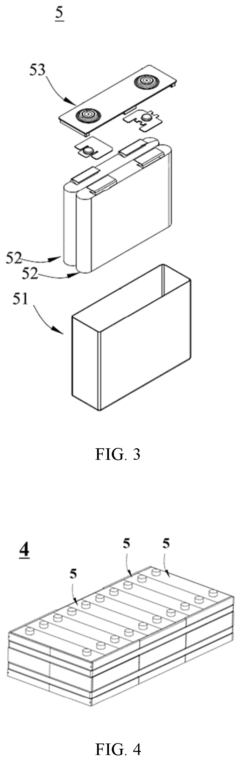

In some embodiments, referring to FIG. 3, the outer packaging may include a shell body 51 and a cover plate 53. The shell body 51 may include a bottom plate and side plates connected to the bottom plate, and the bottom plate and the side plates define, in an enclosing manner, an accommodating cavity. The shell body 51 is provided with an opening in communication with the accommodating cavity, and the cover plate 53 is capable of covering the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution wets the electrode assembly 52. The number of the electrode assemblies 52 included in the secondary battery 5 may be one or more, and those skilled in the art can select the number based on specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 4 shows a battery module 4 as one example. Referring to FIG. 4, in the battery module 4, a plurality of secondary batteries 5 may be sequentially arranged along a length direction of the battery module 4. Certainly, the arrangement may also be in any other manner. Further, the plurality of secondary batteries 5 may be fixed by a fastener.

In some embodiments, the battery module 4 may further include a shell provided with an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

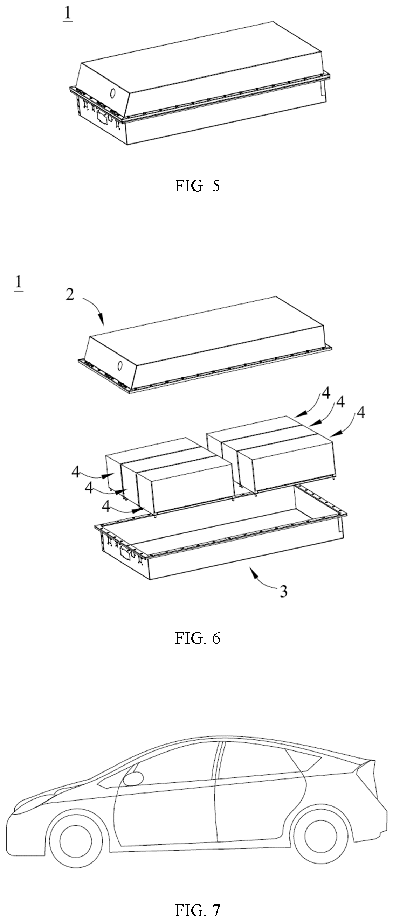

FIGS. 5 and 6 show a battery pack 1 as one example. Referring to FIGS. 5 and 6, the battery pack 1 may include a battery case and a plurality of battery modules 4 arranged in the battery case. The battery case includes an upper case body 2 and a lower case body 3. The upper case body 2 is capable of covering the lower case body 3 to form a closed space for accommodating the battery modules 4. The plurality of battery modules 4 may be arranged in any manner in the battery case.

### [Electric Device]

In addition, the present application further provides an electric device, and the electric device includes the positive electrode plate of the examples of the present application or the secondary battery of the examples of the present application.

In some embodiments, the electric device of the examples of the present application may further include at least one of a battery module or a battery pack. The secondary battery, the battery module, or the battery pack can be used as a power source for the electric device, and can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a secondary battery, a battery module, or a battery pack may be selected based on usage requirements thereof.

FIG. 7 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a secondary battery may thus be used as a power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example 1

### I. Preparation Method

### 1) Preparation of first positive electrode active layer slurry

### Preparation of lithium iron phosphate particles:

Lithium carbonate, ferric oxide, phosphoric acid, glucose, titanium dioxide (calculated by the total weight of the lithium iron phosphate particles, the addition amount of the titanium dioxide satisfied that the titanium content in the prepared lithium iron phosphate particles was 5000 ppm), and polyaniline were weighed separately, where the weight ratio of element Li, element Fe, and element P satisfied Fe: P = 0.968:1 and Li: Fe = 1:0.98, and the weight ratio of the glucose to the polyaniline satisfied glucose: polyaniline = 1:2. An addition amount of the glucose and the polyaniline satisfied that after the first sintering was completed, the carbon content accounted for 0.15% of the weight of the lithium iron phosphate precursor. Water was added to the above substances to obtain a mixture slurry.

The mixture slurry was uniformly mixed using a ball mill, and milling was performed using a sand mill to obtain a slurry having a solid content of 38% and a Dv50 of 400 nm, followed by spray drying (the negative pressure of the high-speed spray dryer was -650 to -200 pascals (Pa), the inlet temperature was 300-360 °C, and the outlet temperature was 100-140°C). The dried reactants were loaded into a sintering furnace for the first sintering; the heating rate was controlled at 5 °C/min, the holding temperature was controlled at 650 °C, and the holding time was 4 h. After the materials were cooled, the materials were pulverized by a mechanical mill to obtain a powder.

The obtained powder, the glucose, the polyaniline, and the water were mixed (calculated by the total weight of the lithium iron phosphate particles, the addition amount of the glucose and the polyaniline satisfied that the carbon content of the product after the second sintering was 1.2%, and the weight ratio of the glucose to the polyaniline satisfied that glucose: polyaniline = 1:2), and the solid content of the mixture was 40%. After uniform mixing, the mixture was processed using the ball mill and the sand mill to obtain a slurry, and the Dv50 of insoluble matters in the slurry was 550 nm. The slurry was spray-dried (the negative pressure of the high-speed spray dryer was -650 to -200 Pa, the inlet temperature was 300-360 °C, and the outlet temperature was 100-140 °C). The dried reactants were loaded into the sintering furnace for a second low-temperature sintering (the heating rate was controlled at 5 °C/min, the sintering temperature was 750 °C, and the sintering time was 4 h). After the materials were cooled, the materials were subjected to a second pulverization to an average primary particle size of 870 nm, and after demagnetization, the lithium iron phosphate particles were obtained, where the carbon content was 1.2%, and the content of element Ti in the lithium iron phosphate particles was 5000 ppm.

The lithium iron phosphate particles, conductive agent carbon black, binder polyvinylidene fluoride, and dispersant polyvinylpyrrolidone were mixed at a mass ratio of 93.0:4.0:2.5:0.5; after the above materials including a positive electrode active material were mixed, the materials were added to N-methylpyrrolidone to be mixed and stirred, and after uniform dispersion, a first positive electrode slurry was prepared.

### 2) Preparation of second positive electrode active layer slurry

Lithium nickel cobalt manganese oxide particles (CPE-16, purchased from Guangdong Brunp Recycling Technology Co., Ltd.), conductive agent carbon black, and binder polyvinylidene fluoride were mixed at a mass ratio of 96.14:2.7:1.16; after the above materials including a positive electrode active material were mixed, the materials were added to N-methylpyrrolidone to be mixed and stirred, and after uniform dispersion, a second positive electrode slurry was prepared.

### 3) Preparation of positive electrode plate

The first positive electrode active layer slurry was uniformly coated on the surface of a current collector aluminum foil at a single-sided weight of 0.15 g/1540 mm² with a coating thickness of 39.75 µm, and the second positive electrode active layer slurry was uniformly coated on the surface of the first positive electrode active slurry at a single-sided weight of 0.25 g/1540 mm² with a coating thickness of 47.2 µm. Then, the coated aluminum foil was transferred to a vacuum drying oven for complete drying. The dried electrode plate was calendered and then punched to obtain a positive electrode plate.

### 4) Preparation of negative electrode plate

Negative electrode active material artificial graphite, conductive agent carbon black, thickener sodium carboxymethylcellulose, and binder styrene-butadiene rubber were added to deionized water at a mass ratio of 97.35:0.7:1:0.95, and the mixture was uniformly stirred to obtain a negative electrode slurry.

Then, the negative electrode slurry was coated on a copper foil at a double-sided weight of 216 mg/1540 mm², followed by drying, cold pressing, and slitting to obtain the negative electrode plate.

### 5) Preparation of separator

A polypropylene film was used as the separator.

### 6) Preparation of battery

The positive electrode plate, the separator, and the negative electrode plate were stacked in sequence, such that the separator was positioned between the positive electrode plate and the negative electrode plate to provide isolation, and then the stacked structure was wound to obtain a bare cell. Tabs were welded to the bare cell, and the bare cell was placed into an aluminum case and baked in a vacuum oven at 100 °C for 8 h. Subsequently, an electrolytic solution was injected, and the aluminum case was sealed to obtain an uncharged battery. The uncharged battery was then sequentially subjected to processes such as standing, cold and hot pressing, formation, shaping, and capacity testing to obtain the lithium-ion battery in Example 1.

The batteries in Examples 2-6 were similar to the preparation method of the battery in Example 1, except that the average primary particle size value and/or the specific surface area of the lithium iron phosphate particles were adjusted; specific material parameters are shown in Table 1. During the preparation of the lithium iron phosphate particles, the differences from Example 1 were as follows:
Example 2: The Dv50 of the mixed slurry after the first milling was decreased to 450 nm.
Example 3: The Dv50 of the mixed slurry after the first milling was increased to 900 nm. FIGS. 1a and 1b are cross-sectional views of the positive electrode plate in Example 3 at a magnification of 1K and 3K, respectively.
Example 4: The Dv50 of the mixed slurry after the first milling was increased to 1100 nm.
Example 5: The Dv50 of the mixed slurry after the first milling was decreased to 350 nm.
Example 6: The Dv50 of the mixed slurry after the first milling was increased to 1200 nm.

The batteries in Examples 7-9 were similar to the preparation method of the battery in Example 1, except that the specific surface area value and the carbon content of the lithium iron phosphate particles were adjusted; specific material parameters are shown in Table 1. During the preparation of the lithium iron phosphate particles, the differences from Example 1 were as follows:
Example 7: The carbon content of the product after the second sintering was adjusted to 0.8%.
Example 8: The carbon content of the product after the second sintering was adjusted to 1.4%.
Example 9: The carbon content of the product after the second sintering was adjusted to 1.5%.

The batteries in Examples 10-11 were similar to the preparation method of the battery in Example 1, except that the specific surface area value of the lithium iron phosphate particles was adjusted; specific material parameters are shown in Table 1. During the preparation of the lithium iron phosphate particles, the differences from Example 1 were as follows:
Example 10: During the first sintering, the weight ratio of glucose to polyaniline was 1:4.
Example 11: During the first sintering, the weight ratio of glucose to polyaniline was 1:0.5.

The batteries in Examples 12-14 were similar to the preparation method of the battery in Example 1, except that the content of element Q was adjusted; specific material parameters are shown in Table 1. During the preparation of the lithium iron phosphate particles, the differences from Example 1 were as follows:
Example 12: The temperature of the first sintering was controlled at 590 °C, the temperature of the second sintering was controlled at 720 °C, and the Ti content was 0 ppm.
Example 13: The temperature of the first sintering was controlled at 620 °C, the temperature of the second sintering was controlled at 740 °C, and the Ti content was 2500 ppm.
Example 14: The temperature of the first sintering was controlled at 655 °C, the temperature of the second sintering was controlled at 755 °C, and the Ti content was 6000 ppm.

The batteries in Examples 15-17 were similar to the preparation method of the battery in Example 1, except that the coating areal weight of the first positive electrode active layer was adjusted; details are shown in Table 1.

The preparation method in Example 18 was similar to the preparation method in Example 1, except that lithium nickel cobalt manganese oxide particles were used as the first positive electrode active layer, and lithium iron phosphate particles were used as the second positive electrode active layer.

The battery in Comparative Example 1 was similar to the preparation method in Example 1, except that the adopted lithium iron phosphate particles were different from the lithium iron phosphate particles in Example 1; specific parameters of the lithium iron phosphate particles adopted in Comparative Example 1 are shown in Table 1. The preparation method of the lithium iron phosphate particles of Comparative Example 1 is as follows:
Lithium carbonate, ferric oxide, phosphoric acid, glucose, titanium dioxide (calculated by the total weight of the lithium iron phosphate particles, the addition amount of the titanium dioxide satisfied that the titanium content in the prepared lithium iron phosphate particles was 5000 ppm), and polyaniline were weighed separately, where the weight ratio of element Li, element Fe, and element P satisfied Fe: P = 0.968:1 and Li: Fe = 1:0.98, the weight ratio of the glucose to the polyaniline satisfied glucose: polyaniline = 1:2, and the added amount of glucose satisfied that after one sintering was completed, the carbon content accounted for 1.2% of the weight of the lithium iron phosphate particles. Water was added to the above substances to obtain a mixture slurry.

The slurry was uniformly mixed using a ball mill, and milling was performed using a sand mill to obtain a slurry having a solid content of 38% and a Dv50 of 400 nm, followed by spray drying (the negative pressure of the high-speed spray dryer was -650 to -200 Pa, the inlet temperature was 300-360 °C, and the outlet temperature was 100-140°C). The dried reactants were loaded into a sintering furnace for one sintering; the heating rate was controlled at 5 °C/min, the holding temperature was controlled at 810 °C, and the holding time was 4 h. After the materials were cooled, the materials were processed by means of jet milling or mechanical milling to obtain the lithium iron phosphate particles, and the Dv50 of the lithium iron phosphate particles was 300 nm.

The battery in Comparative Example 2 was similar to the preparation method of the battery in Example 1, except that the average primary particle size of the lithium iron phosphate particles was greater than the average primary particle size of the lithium iron phosphate particles in Example 1; details are shown in Table 1. During the preparation of the lithium iron phosphate particles, the differences from Example 1 were as follows:
Comparative Example 2: The Dv50 of the product after one pulverization was 1300 nm, and the temperature of the second sintering was 780 °C.

The batteries in Comparative Examples 3-4 were similar to the preparation method of the battery in Example 1, except that the specific surface area and the carbon content of the lithium iron phosphate particles were adjusted; details are shown in Table 1. During the preparation of the lithium iron phosphate particles, the differences from Example 1 were as follows:
Comparative Example 3: The carbon content of the product after the second sintering was controlled at 0.7%.
Comparative Example 4: The temperature of the second sintering was 770 °C, and the carbon content of the product after the second sintering was controlled at 2.1%.

### II. Battery Performance Test

### 1. Performance test of positive electrode active material

### 1) Test method for average primary particle size of lithium iron phosphate particles

An argon ion beam was applied perpendicularly to a major surface of the positive electrode plate to cut open the electrode plate and expose a cross section; the cross section was photographed using a scanning electron microscope, and the boundary between a first positive electrode active layer and a second positive electrode active layer on the cross section was clear; the long-diameter statistical method was used to perform the statistical analysis on particle sizes of the positive electrode active layer including the lithium iron phosphate particles; specifically, the total number of lithium iron phosphate particles having a primary particle size greater than 80 nm and the sum of primary particle sizes of the lithium iron phosphate particles having a primary particle size greater than 80 nm might be statistically calculated in a scanning electron microscope photograph, and the average primary particle size of the lithium iron phosphate particles = the primary particle sizes of all the lithium iron phosphate particles / the total number of the lithium iron phosphate particles.

Since particles satisfying 0 < primary particle size ≤ 80 nm are prone to adhesion, there are relatively large errors in statistical calculation, and it is difficult to identify the particles separately. Therefore, during the statistical calculation of the primary particle size, particles satisfying 0 < primary particle size ≤ 80 nm are not within the statistical scope.

### 2) Test method for specific surface area of lithium iron phosphate particles

According to the testing standard method of GB/T 19587-2017, the specific surface areas of the lithium iron phosphate particles and the lithium nickel cobalt manganese oxide particles were tested using a gas adsorption method. Specifically, the lithium iron phosphate particles were taken as a sample and placed in a sample tube. The sample tube was immersed in liquid nitrogen at -196 °C, and the adsorption amount of nitrogen gas on a solid surface under different pressures was determined at a relative pressure of 0.05 to 0.30. Based on the BET multilayer adsorption theory and formula, a monolayer adsorption amount of the sample was calculated, thereby obtaining the specific surface area of the sample.

### 3) Test method for carbon content of lithium iron phosphate particles

The carbon content of the lithium iron phosphate particles was tested by an infrared absorption method after burning the lithium iron phosphate particles using a high-frequency induction furnace. The specific testing process was based on the standard GB/T 20123-2006/ISO 15350:2000.

### 4) Test method for content of element Q (e.g., element Ti) of lithium iron phosphate particles

The test method for the content of element Q of the lithium iron phosphate particles was performed with reference to GB/T 33822-2017.

### 5) Measurement of η value of lithium iron phosphate particles

First, a coin cell was prepared by using the lithium iron phosphate particles as a positive electrode active material. The specific preparation process of the coin cell is as follows: 2.0000 g of the lithium iron phosphate particles was mixed with 0.1111 g of conductive carbon black and 0.1111 g of polyvinylidene fluoride, then the mixture was added to 2.5 g of an organic solvent N-methylpyrrolidone, and the mixture was fully mixed uniformly to form a slurry. The slurry was coated on an aluminum foil with a coating thickness of 140 µm, and the coated aluminum foil was vacuum-dried at 120 °C for 2 h and punched into a circular disc with a diameter of 13 mm using a punch. The disc was pressed using a tablet press at 10 MPa and held under vacuum at 120 °C for 12 h to obtain a positive electrode plate. The positive electrode plate was weighed, where the loading capacity of the lithium iron phosphate particles was 11-12 mg. The coin cell was assembled in an argon-protected glove box, where a lithium metal foil was used as the negative electrode, the electrolytic solution was a mixed solvent of EC (ethylene carbonate) and DMC (1,2-dimethyl carbonate) at a volume ratio of 1:1, the electrolyte was LiPF₆, and the separator was a Celgard 2400 microporous polyethylene film.

Electrical properties of the prepared coin cell were tested on a LAND battery tester. Specifically, the coin cell was charged and discharged at a constant current of 0.1C for two cycles in a voltage range of 2.0-3.75 V, and then charged and discharged at a constant current of 1C for one cycle; in the charge-discharge test at 1C, the capacity value at the discharge voltage of 3.2 V was extracted and recorded as C1, the capacity value upon discharging to 2.0 V was extracted and recorded as C2, and η = C1 / C2. The charging process included constant-voltage charging, with a constant voltage of 3.75 V and a constant-voltage cutoff current of 50 uA.

### 2. Battery performance test

### 1) Test method for specific capacity of battery

The battery was placed in an oven environment at 25 °C and left to stand for 2 h until the battery temperature was maintained at 25 °C; the battery was discharged at a constant current of 1/3C to 2.0 V, followed by a pause of 5 min; after the battery was charged at a constant current of 1/3C to 4.35 V, the battery was charged at a constant voltage of 4.35 V to a cutoff current of 0.05C, followed by a pause of 5 min.

The battery was discharged at a constant current of 1/3C to 2.0 V. The capacity obtained in this step is the actual test capacity of the cell, and combined with the mass of the positive electrode active substance, the specific capacity of the battery can be calculated, with specific capacity = capacity / mass of positive electrode active substance.

### 2) Test method for gas generation

An appropriate amount of diethyl carbonate (DEC) was taken to wipe the liquid injection port of the cell; one end of a clean and oil-free hollow long connector was welded to the liquid injection port of the cell, and the other end of the long connector was connected to a Teflon hose filled with silicone oil via a clamp. The other end of the hose was connected to a TDK plug-in air pressure gauge filled with silicone oil via a connector fully coated with AB glue. Epoxy resin glue was fully coated on the long connector, the clamp, and the joint, and left to stand for 24 h to serve the purpose of securing and preventing air leakage.

Before testing, the pressure gauge was connected to a power supply and zeroed; the cell was properly secured in a fixture, and the cell was put into an oven in preparation for testing. The specific test steps were as follows:
(1) The battery was left to stand at 45 °C for 2 h; (2) the battery was discharged at a constant current of 1C to 2.0 V; (3) the battery was left to stand for 5 min; (4) the battery was charged at a constant current of 1.2C to 0.5 Cn Ah; (5) the battery was charged at a constant current of 0.87C to 0.3 Cn Ah; (6) the battery was charged at a constant current of 1/3C to 4.35 V, and then the battery was charged at a constant voltage of 4.2 V to a cutoff current of 0.05 C; (7) the battery was left to stand for 5 min; (8) the battery was discharged at a constant current of 1C to 2.0 V; (9) the battery was left to stand for 5 min; (10) steps (4) to (9) were cycled for 1000 cycles. If the gas generation value reached 0.35 MPa, the test was stopped.

The specific test steps for Cn were as follows: The cell was left to stand at 25 °C for 30 min; the cell was discharged at a constant current of 1C to 2.0 V; the cell was left to stand for 5 min; the cell was charged at a constant current of 1/3C to 4.35 V, and then the cell was charged at a constant voltage of 4.2 V to a cutoff current of 0.05C; the cell was left to stand for 5 min; the cell was discharged at a constant current of 1 C to 2.0 V (the capacity Cn was extracted in this step); the cell was left to stand for 5 min.

### III. Analysis of Test Results of Examples and Comparative Examples

The batteries of the examples and the comparative examples were respectively prepared according to the above methods, and various performance parameters were measured. The parameter table of the positive electrode active materials is shown in Table 1, and the performance test result table is shown in Table 2.

**Table 1 Parameter table of positive electrode active materials**

| Serial number | Lithium iron phosphate particle | | | | | | | | Lithium nickel cobalt manganese oxide particle | |
|---|---|---|---|---|---|---|---|---|---|---|
| | Position | Average primary particle size (nm) | BET (m²/g) | Carbon content (wt%) | z | Q content (ppm) | η value (%) | Areal weight (g/mm²) | Position | Areal weight (g/mm²) |
| Example 1 | First positive electrode active layer | 870 | 6 | 1.2 | 5.0 | 5000 | 92.2 | 150 | Second positive electrode active layer | 250 |
| Example 2 | First positive electrode active layer | 650 | 6 | 1.2 | 5.0 | 5000 | 93 | 150 | Second positive electrode active layer | 250 |
| Example 3 | First positive electrode active layer | 1800 | 5.7 | 1.2 | 4.8 | 5000 | 91.8 | 150 | Second positive electrode active layer | 250 |
| Example 4 | First positive electrode active layer | 2500 | 5.5 | 1.2 | 4.6 | 5000 | 91.2 | 150 | Second positive electrode active layer | 250 |
| Example 5 | First positive electrode active layer | 500 | 7 | 1.2 | 5.8 | 5000 | 94.1 | 150 | Second positive electrode active layer | 250 |
| Example 6 | First positive electrode active layer | 3000 | 5 | 1.2 | 4.2 | 5000 | 90.1 | 150 | Second positive electrode active layer | 250 |
| Example 7 | First positive electrode active layer | 870 | 3 | 0.8 | 3.8 | 5000 | 88.1 | 150 | Second positive electrode active layer | 250 |
| Example 8 | First positive electrode active layer | 870 | 8 | 1.4 | 5.7 | 5000 | 94.5 | 150 | Second positive electrode active layer | 250 |
| Example 9 | First positive electrode active layer | 870 | 7 | 1.5 | 4.7 | 5000 | 93.9 | 150 | Second positive electrode active layer | 250 |
| Example 10 | First positive electrode active layer | 870 | 3 | 2 | 1.5 | 5000 | 88.5 | 150 | Second positive electrode active layer | 250 |
| Example 11 | First positive electrode active layer | 870 | 8 | 0.94 | 8.5 | 5000 | 91 | 150 | Second positive electrode active layer | 250 |
| Example 12 | First positive electrode active layer | 870 | 6 | 1.2 | 5.0 | 0 | 82 | 150 | Second positive electrode active layer | 250 |
| Example 13 | First positive electrode active layer | 870 | 6 | 1.2 | 5.0 | 2500 | 90 | 150 | Second positive electrode active layer | 250 |
| Example 14 | First positive electrode active layer | 870 | 6 | 1.2 | 5.0 | 6000 | 95 | 150 | Second positive electrode active layer | 250 |
| Example 15 | First positive electrode active layer | 870 | 6 | 1.2 | 5.0 | 5000 | 92.2 | 100 | Second positive electrode active layer | 250 |
| Example 16 | First positive electrode active layer | 870 | 6 | 1.2 | 5.0 | 5000 | 92.2 | 50 | Second positive electrode active layer | 250 |
| Example 17 | First positive electrode active layer | 870 | 6 | 1.2 | 5.0 | 5000 | 92.2 | 20 | Second positive electrode active layer | 250 |
| Example 18 | Second positive electrode active layer | 870 | 6 | 1.2 | 5.0 | 5000 | 92.2 | 150 | First positive electrode active layer | 250 |
| Comparative Example 1 | First positive electrode active layer | 360 | 12.8 | 1.2 | 10.7 | 5000 | 84 | 150 | Second positive electrode active layer | 250 |
| Comparative Example 2 | First positive electrode active layer | 5000 | 4 | 1.2 | 3.3 | 5000 | 84.7 | 150 | Second positive electrode active layer | 250 |
| Comparative Example 3 | First positive electrode active layer | 870 | 2.4 | 0.7 | 3.4 | 5000 | 85 | 150 | Second positive electrode active layer | 250 |
| Comparative Example 4 | First positive electrode active layer | 870 | 12 | 2.1 | 5.7 | 5000 | 87.2 | 150 | Second positive electrode active layer | 250 |

**Table 2 Performance test result table**

| Serial number | Gas generation pressure value (45 °C, 1000 cycles, Kpa) | Specific capacity (mAh/g) |
|---|---|---|
| Example 1 | 140 | 165.3 |
| Example 2 | 175 | 167.2 |
| Example 3 | 115 | 163.5 |
| Example 4 | 105 | 163.0 |
| Example 5 | 185 | 169.2 |
| Example 6 | 95 | 162.0 |
| Example 7 | 80 | 160.0 |
| Example 8 | 160 | 167.2 |
| Example 9 | 180 | 167.2 |
| Example 10 | 90 | 158.0 |
| Example 11 | 145 | 163.0 |
| Example 12 | 145 | 161.2 |
| Example 13 | 140 | 162.6 |
| Example 14 | 145 | 164.5 |
| Example 15 | 135 | 168.3 |
| Example 16 | 132 | 172.3 |
| Example 17 | 125 | 175.5 |
| Example 18 | 145 | 161.2 |
| Comparative Example 1 | 285 | 165.6 |
| Comparative Example 2 | 80 | 155.0 |
| Comparative Example 3 | 75 | 153.0 |
| Comparative Example 4 | 295 | 163.0 |

According to the results in the above table, as can be seen from Examples 1-18 and Comparative Example 1, increasing the average primary particle size of the lithium iron phosphate particles and reducing the specific surface area of the lithium iron phosphate particles can reduce the degree of gas generation of the positive electrode plate having a double-layer positive electrode active material formed by separately coating the lithium iron phosphate particles and the lithium nickel cobalt manganese oxide particles. As can be seen from Examples 1-18 and Comparative Example 2, when the average primary particle size of the lithium iron phosphate particles is excessively large, the specific capacity and the kinetic performance of the secondary battery will be reduced. As can be seen from Examples 1-18 and Comparative Examples 3-4, when the BET of the lithium iron phosphate particles is excessively small, the specific capacity of the secondary battery will be reduced, and when the BET of the lithium iron phosphate particles is excessively large, the degree of gas generation of the secondary battery will be increased. In summary, when the average primary particle size of the lithium iron phosphate particles is 500-3000 nm, and the specific surface area BET is 3-8 m²/g, the degree of gas generation of the secondary battery can be reduced while ensuring the specific capacity of the secondary battery.

As can be seen from Examples 1-6, when the average primary particle size of the lithium iron phosphate particles is controlled to 500-3000 nm, the degree of gas generation of the secondary battery can be reduced while ensuring the specific capacity of the secondary battery.

As can be seen from Examples 1 and 7-9, when the BET value of the lithium iron phosphate particles is controlled to 3-8 m²/g, the degree of gas generation of the secondary battery can be reduced while ensuring the specific capacity of the secondary battery.

As can be seen from Examples 1 and 10-11, increasing the proportion of the carbon source film-forming agent is conducive to achieving the dense coating of the carbon layer, and the density of carbon coating of the present application is conducive to further improving the kinetic performance and the specific capacity of the secondary battery.

As can be seen from Examples 1 and 12-14, adding a metal element, such as the titanium element, to the lithium iron phosphate particles can improve the kinetic performance of the positive electrode active material. Furthermore, increasing the content of the metal element, for example, within the range of 1000-10000 ppm, is conducive to further improving the kinetic performance and minimizing the influence on the average primary particle size of the lithium iron phosphate particles.

As can be seen from Examples 1 and 15-17, reducing the content of the positive electrode active layer containing the lithium iron phosphate particles in the double-layer positive electrode active layer can improve the specific capacity of the secondary battery, but will increase the cost of the secondary battery. Controlling the areal weight of the positive electrode active layer containing the lithium iron phosphate particles within the range of 20-150 g/m² is conducive to controlling the cost of the secondary battery while further improving the specific capacity of the secondary battery.

As can be seen from Examples 1 and 18, disposing the lithium iron phosphate particles in the first positive electrode active layer close to the current collector is conducive to further improving the specific capacity of the secondary battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A positive electrode plate, wherein the positive electrode plate comprises a current collector and a positive electrode active layer, and the positive electrode active layer is disposed on at least one surface of the current collector;
the positive electrode active layer comprises a first positive electrode active layer formed at least on the current collector, and a second positive electrode active layer formed on a side, away from the current collector, of the first positive electrode active layer;
the first positive electrode active layer comprises lithium iron phosphate particles, and the second positive electrode active layer comprises lithium nickel cobalt manganese oxide particles; or,
the first positive electrode active layer comprises lithium nickel cobalt manganese oxide particles, and the second positive electrode active layer comprises lithium iron phosphate particles; and
an average primary particle size of the lithium iron phosphate particles is 500-3000 nm, and a specific surface area BET of the lithium iron phosphate particles is 3-8 m²/g.

2. The positive electrode plate according to claim 1, wherein an average primary particle size of the lithium iron phosphate particles is 650-2500 nm.

3. The positive electrode plate according to claim 1 or 2, wherein a specific surface area BET of the lithium iron phosphate particles is 4-7 m²/g.

4. The positive electrode plate according to any one of claims 1 to 3, wherein calculated based on a total weight of the lithium iron phosphate particles, a carbon content of the lithium iron phosphate particles is 0.8-2.0 wt%.

5. The positive electrode plate according to claim 4, wherein calculated based on a total weight of the lithium iron phosphate particles, a carbon content of the lithium iron phosphate particles is 1.0-1.6 wt%.

6. The positive electrode plate according to any one of claims 1 to 5, wherein
the lithium iron phosphate particles have a molecular formula Liₘ₁Feₓ₁P_{y1}O_{z1}Q_{q1}, wherein Q comprises at least one of Al, Na, K, Mg, Cu, Mn, Cr, Zn, Pb, Ca, Co, Ni, Sr, Nb, V, Ti, B, S, Si, N, F, Cl, or Br, 0.95 ≤ m1 ≤ 1.15, 0.9 ≤ x1 ≤ 1, 0.95 ≤ y1 ≤ 1, 3.5 ≤ z1 ≤ 4, and 0 < q1 ≤ 0.1, and/or
the lithium nickel cobalt manganese oxide particles have a molecular formula LiRₓ₂Ni_{y2}Co_{z2}Mn_{1-x2-y2-z2}O₂, wherein the R comprises at least one of Cr, Ti, V, Mg, Al, or Nb, 0 ≤ x2 < 1, 0 < y2 < 1, 0 < z2 < 1, and 0 < x2 + y2 + z2 < 1.

7. The positive electrode plate according to claim 6, wherein the Q comprises at least one of Ti, V, Mg, or Nb.

8. The positive electrode plate according to claim 6 or 7, wherein calculated based on a total weight of the lithium iron phosphate particles, a content of Q in the lithium iron phosphate particles is 1000-10000 ppm.

9. The positive electrode plate according to any one of claims 1 to 8, wherein a capacity proportion η of the lithium iron phosphate particles is ≥ 88%, and the η is defined as follows:
a battery having the lithium iron phosphate particles as a positive electrode active material is charged and discharged at a constant current of 0.1C for two cycles in a voltage range of 2.0-3.75 V, and then charged and discharged at a constant current of 1C for one cycle; in the chargedischarge test at 1C, a capacity value at a discharge voltage of 3.2 V is extracted and recorded as C1, a capacity value upon discharging to 2.0 V is extracted and recorded as C2, and η = C1 / C2; wherein a charging process comprises constant-voltage charging, with a constant voltage of 3.75 V and a constant-voltage cutoff current of 50 uA.

10. The positive electrode plate according to any one of claims 1 to 9, wherein the lithium iron phosphate particles satisfy at least one of (a) to (f):
a) a Dv10 of the lithium iron phosphate particles is ≥ 200 nm;
b) a Dv50 of the lithium iron phosphate particles is 500-5000 nm;
c) a Dv90 of the lithium iron phosphate particles is ≤ 10000 nm;
d) a Dv99 of the lithium iron phosphate particles is ≤ 12000 nm;
e) a powder compacted density of the lithium iron phosphate under a pressure of 3T is ≥ 2.25 g/cm³; or
f) a powder resistivity of the lithium iron phosphate is less than 60 Ω·cm.

11. The positive electrode plate according to any one of claims 1 to 10, wherein when the first positive electrode active layer comprises lithium iron phosphate particles, and the second positive electrode active layer comprises lithium nickel cobalt manganese oxide particles, a coating areal weight of the first positive electrode active layer is 0.02-0.38 g/1540 mm², and a coating areal weight of the second positive electrode active layer is 0.08-0.32 g/1540 mm²; or
when the first positive electrode active layer comprises lithium nickel cobalt manganese oxide particles, and the second positive electrode active layer comprises lithium iron phosphate particles, a coating areal weight of the first positive electrode active layer is 0.08-0.32 g/1540 mm², and a coating areal weight of the second positive electrode active layer is 0.02-0.38 g/1540 mm².

12. The positive electrode plate according to any one of claims 1 to 11, wherein a total thickness of the positive electrode active layer is 50-150 µm.

13. The positive electrode plate according to any one of claims 1 to 12, wherein the first positive electrode active layer comprises lithium iron phosphate particles, and the second positive electrode active layer comprises lithium nickel cobalt manganese oxide particles.

14. The positive electrode plate according to any one of claims 1 to 13, wherein the lithium iron phosphate particles are mainly obtained by a following preparation method:
providing raw materials containing at least a lithium source, an iron source, and a phosphorus source, and performing sintering at least twice, wherein
a temperature of a first sintering is 500-760 °C; and
a temperature of a second sintering is 700-800 °C.

15. The positive electrode plate according to claim 14, wherein the lithium iron phosphate particles are mainly obtained by a following preparation method:
providing raw materials containing at least a lithium source, an iron source, a phosphorus source, a carbon source, a carbon film-forming agent, and a modifier, and performing sintering at least twice, wherein
a carbon content of a material after a first sintering is 0.01-0.79 wt%; and
a carbon content of a material after a second sintering is 0.8-2.0 wt%.

16. The positive electrode plate according to claim 14 or 15, wherein a preparation method for the lithium iron phosphate particles comprises the following steps:
performing a first pulverization after the first sintering, and performing a second pulverization after the second sintering, wherein
a Dv50 of a product after the first pulverization is 300-1200 nm; and
a Dv50 of a product after the second pulverization is 500-5000 nm.

17. A secondary battery, wherein the secondary battery comprises the positive electrode plate according to any one of claims 1 to 16.

18. An electric device, wherein the electric device comprises the positive electrode plate according to any one of claims 1 to 16 or the secondary battery according to claim 17.
